# EUROPEAN PATENT APPLICATION

(11) **EP 3 929 255 A1**
(43) Date of publication of application: **29.12.2021**
(21) Application number: 20759892.1
(22) Date of filing: 04.02.2020
(51) Int. Cl.: C09D 5/24, C09D 127/12, C09D 127/16, C09D 127/18, C09D 127/20, C09D 7/61, C09D 7/65

(54) **COMPOSITION FOR FLUORORESIN-CONTAINING COATING, COATING FILM, AND SUBSTRATE**

(30) Priority: 22.02.2019 JP 2019030397
(71) Applicant: Taiyo Nippon Sanso Corporation, Tokyo 142-8558 (JP)
(72) Inventor: KODA, Yasuhito, Tokyo 142-8558 (JP); MIYOSHI, Kentaro, Tokyo 142-8558 (JP); TAKADA, Katsunori, Tokyo 142-8558 (JP); IGARASHI, Hiroshi, Tokyo 142-8558 (JP)
(74) Representative: HGF
(86) International application number: PCT/JP2020/004048
(87) International publication number: WO 2020/170797

(57) **Abstract**

One object of the present invention is to provide a composition for a fluororesin-containing coating which is less contaminated by carbon nanotubes, has sufficient conductivity, and has excellent workability at the time of coating. The present invention provides a composition for a fluororesin-containing coating containing carbon nanotubes, a fluororesin, and a dispersion medium, and the amount of the carbon nanotubes is 0.01 ~ 0.5% by mass with respect to 100% by mass of the total of the fluororesin and the carbon nanotubes.

## Description

### TECHNICAL FIELD

The present invention relates to a composition for a fluororesin-containing coating, a coating film, and a substrate.

### BACKGROUND ART

Carbon nanotubes are used in various industrial applications because of their excellent conductivity. In addition, fluororesin has excellent chemical resistance and heat resistance. Therefore, in order to utilize the respective characteristics of the carbon nanotubes and the fluororesin, industrial use of compositions containing the carbon nanotubes and the fluororesin has been proposed (Patent Documents 1 to 3).

Patent Document 1 discloses a method for producing a conductive fluororesin thin film. In the method for producing a conductive fluororesin thin film disclosed in Patent Document 1, a carbon nanotube dispersion liquid and a fluororesin dispersion liquid are mixed, the mixed dispersion liquid is coated onto a substrate, and the mixture is dried.
Patent Document 2 discloses a composite coating film. The composite coating film disclosed in Patent Document 2 is prepared by coating a carbon fiber dispersion liquid on an undercoat coating film layer coated on a substrate to form a carbon fiber-containing coating film layer, and then drying and baking.
Patent Document 3 discloses a composite molded product having a conductive portion and a welded portion. In the composite molded product disclosed in Patent Document 3, the conductive portion contains fluororesin and a nanocarbon material.

In a semiconductor production device, insulating materials such as organic solvents, ultrapure water, and hydrogen peroxide solution are used. Methods to protect the surface of a member in contact with these insulating materials by providing a coating film for the purpose of preventing corrosion and wear of the member have been studied.

Especially in a semiconductor production process, highly reactive compounds are used. Therefore, in a semiconductor production device, the use of a fluororesin lining having excellent durability against chemicals and the like has been proposed (for example, Patent Document 3).

### PRIOR ART DOCUMENTS

### PATENT LITERATURE

Patent Document 1 Japanese Unexamined Patent Application, First Publication No. 2008-200608
Patent Document 2 Japanese Unexamined Patent Application, First Publication No. 2009- 172862
Patent Document 3 Japanese Unexamined Patent Application, First Publication No. 2018-090323

### SUMMARY OF INVENTION

### PROBLEM TO BE SOLVED BY THE INVENTION

In Examples in Patent Document 1, when the fluororesin dispersion liquid and the carbon nanotube dispersion liquid are mixed, the ratio of the carbon nanotubes with respect to the total of the carbon nanotubes and the fluororesin is adjusted to 5% by weight or more. Therefore, the amount of carbon nanotubes contained in the obtained thin film is relatively high.

The composite coating film disclosed in Patent Document 2 requires that the carbon fiber-containing coating film layer be formed on the upper side of the undercoat coating film layer coated on the substrate. Therefore, the amount of the carbon nanotubes on the surface of the composite coating film is relatively high.

Therefore, when the coating film disclosed in Patent Documents 1 and 2 is coated to protect the surface of the reaction vessel of the semiconductor production device, the carbon nanotubes may be desorbed from the coating film in the semiconductor production process. Therefore, the carbon nanotubes desorbed from the coating film may contaminate the inside of the device or the product.

On the other hand, if the amount of the carbon nanotubes is reduced in order to reduce the loss of the carbon nanotubes, sufficient conductivity cannot be obtained.

In addition, in the composite coating film disclosed in Patent Document 2, since the undercoat coating film layer is provided between the substrate and the carbon fiber-containing coating film layer at the time of film formation, there is no electric conduction between each layer in the composite coating film, and the conductivity in the thickness direction is not sufficient. Therefore, when coated to the reaction vessel of a semiconductor production device, the insulation state of the semiconductor may not be maintained, and dielectric breakdown may occur.

The composite molded product disclosed in Patent Document 3 requires a workspace for welding a sheet. Therefore, depending on the structure of the device and the shape of the reaction vessel, welding work for lining may be difficult, and workability at the time of coating is not sufficient.

The present invention provides a composition for a fluororesin-containing coating which is less contaminated by carbon nanotubes, has sufficient conductivity, and has excellent workability during coating.

### MEANS FOR SOLVING THE PROBLEM

As a result of diligent studies by the inventors of the present invention, the inventors found that it is possible to reduce the desorption of the carbon nanotubes from the coating film while imparting sufficient conductivity to the entire coating film by using a dispersion liquid in which the carbon nanotubes and the fluororesin are uniformly dispersed, and have completed the present invention.

That is, the present invention provides the following compositions for a fluororesin-containing coating.
[1] A composition for a fluororesin-containing coating containing carbon nanotubes, a fluororesin, and a dispersion medium, and the amount of the carbon nanotubes is 0.01 ~ 0.5% by mass with respect to 100% by mass of the total of the fluororesin and the carbon nanotubes.
[2] The composition for a fluororesin-containing coating according to [1], wherein the fluororesin is at least one selected from the group consisting of a copolymer including a structural unit based on tetrafluoroethylene and a structural unit based on perfluoroalkyl vinyl ether, a copolymer including a structural unit based on tetrafluoroethylene, and a structural unit based on hexafluoropropylene, a copolymer including a structural unit based on tetrafluoroethylene and a structural unit based on ethylene, polytetrafluoroethylene, and polyvinylidene fluoride.
[3] The composition for a fluororesin-containing coating according to [1] or [2], wherein an average fiber length of the carbon nanotubes is 100 ~ 600 µm.
[4] The composition for a fluororesin-containing coating according to any one of [1] to [3], wherein the composition further contains a dispersant for dispersing the carbon nanotubes in the dispersion medium.
[5] The composition for a fluororesin-containing coating according to [4], wherein the dispersant is at least one selected from the group consisting of carboxymethyl cellulose, carboxyethyl cellulose, cellulose ether, aminoethyl cellulose, oxyethyl cellulose, hydroxymethyl cellulose, hydroxyethyl cellulose, hydroxypropyl cellulose, methyl cellulose, ethyl cellulose, benzyl cellulose, and trimethyl cellulose.
[6] The composition for a fluororesin-containing coating according to [4] or [5], wherein the concentration of the dispersant is 50 ~ 3000 parts by mass with respect to 100 parts by mass of the carbon nanotubes.
[7] A coating film which is a heat-treated product of the composition for a fluororesin-containing coating according to any one of [1] to [6].
[8] A substrate heat-treated with the composition for a fluororesin-containing coating according to any one of [1] to [6].
[9] The substrate according to [8], wherein a surface resistivity thereof is 1 ~ 10¹⁰ Ω/□.

### EFFECTS OF THE INVENTION

According to the present invention, it is possible to provide a composition for a fluororesin-containing coating which is less contaminated by carbon nanotubes, has sufficient conductivity, and has excellent workability at the time of coating.

### BRIEF DESCRIPTION OF DRAWINGS

FIG. 1 is a flow chart showing an example of a production method for a substrate.
FIG. 2 is a schematic diagram showing an example of a semiconductor production device.
FIG. 3 is a cross-sectional view of a member forming a tank included in the semiconductor production device shown in FIG. 2.

### DETAILED DESCRIPTION OF THE PREFERRED EMBODIMENTS

In the present description, "∼" indicating a numerical range means that the numerical values before and after the numerical range are included as the lower limit value and the upper limit value.

The composition for a fluororesin-containing coating of the present invention contains carbon nanotubes, a fluororesin and a dispersion medium. In the composition for a fluororesin-containing coating of the present invention, the carbon nanotubes and the fluororesin are dispersed in the dispersion medium.

The composition for a fluororesin-containing coating of the present invention preferably further contains a dispersant.

The composition for a fluororesin-containing coating of the present invention may further contain components other than the carbon nanotubes, the fluororesin, and the dispersion medium as optional components as long as the effects of the present invention are not impaired.

The carbon nanotubes contribute to conductivity when used as a coating film. Since the composition for a fluororesin-containing coating of the present invention contains the carbon nanotubes, the resulting coating film is imparted with conductivity.

It is preferable that the carbon nanotubes be uniformly attached to the surface of the fluororesin from the viewpoint that the conductivity when used as a coating film is further excellent and the amount of the carbon nanotubes can be relatively reduced.

The average fiber length of the carbon nanotubes is preferably 100 ~ 600 µm, more preferably 300 ~ 600 µm, and even more preferably 500 ~ 600 µm. When the average fiber length of the carbon nanotubes is equal to or more than the lower limit value, the conductivity of the coating film is further improved. When the average fiber length of the carbon nanotubes is equal to or less than the upper limit value, the carbon nanotubes tend to attach uniformly to the fluororesin when the coating film is formed.

The average fiber length of the carbon nanotubes can be measured, for example, by observation with a scanning electron microscope.

The fluororesin is not particularly limited. The fluororesin can be appropriately selected in consideration of the chemical and physical properties intended to be imparted to the coating film. Preferable examples of the fluororesin include a copolymer including a structural unit based on tetrafluoroethylene and a structural unit based on perfluoroalkyl vinyl ether, a copolymer including a structural unit based on tetrafluoroethylene, and a structural unit based on hexafluoropropylene, a copolymer including a structural unit based on tetrafluoroethylene and a structural unit based on ethylene, polytetrafluoroethylene, and polyvinylidene fluoride. Among these, polytetrafluoroethylene is particularly preferable because it does not melt by firing, it is difficult for the carbon nanotubes attached to the particle surface thereof to become detached by melting, and it is easy to maintain a conductive path. However, specific examples of fluororesin are not limited to these examples. One kind of the fluororesin may be used alone, or two or more kinds of the fluororesin may be used in combination.

The dispersion medium is a liquid medium that is chemically stable at room temperature (25°C). The dispersion medium is not particularly limited, and may be an aqueous medium or an organic medium. Specific examples of the dispersion medium include water; alcohols such as methanol, ethanol, and diethylene glycol; ketones such as acetone and methyl ethyl ketone; aldehydes such as acetaldehyde and formaldehyde; ethers such as dimethyl ether; hydrocarbons such as hexane and octane; and aromatic hydrocarbons such as benzene and toluene. However, the dispersion medium is not limited to these examples. One kind of the dispersion medium may be used alone, or two or more kinds of the dispersion medium may be used in combination.

The dispersant disperses the carbon nanotubes in the dispersion medium. It can be said that the dispersant is a compound that contributes to improving the dispersibility of the carbon nanotubes in the dispersion medium. Examples of the dispersant include cellulose derivatives and surfactants. The surfactant may be a cationic surfactant, an anionic surfactant, an amphoteric surfactant, or a nonionic surfactant. One kind of the dispersant may be used alone, or two or more kinds of the dispersant may be used in combination.

The cellulose derivative further has a function as a binder for binding the carbon nanotubes and the fluororesin when the composition for a fluororesin-containing coating is used as a coating film. A cellulose derivative is preferable as the dispersant because the dispersion stability of the composition for a fluororesin-containing coating and the dispersibility of the carbon nanotubes and the fluororesin in the dispersion medium are further improved.

As the cellulose derivative, at least one selected from the group consisting of carboxymethyl cellulose, carboxyethyl cellulose, cellulose ether, aminoethyl cellulose, oxyethyl cellulose, hydroxymethyl cellulose, hydroxyethyl cellulose, hydroxypropyl cellulose, methyl cellulose, ethyl cellulose, benzyl cellulose, and trimethyl cellulose can be used.

Examples of the optional component include a binder (excluding cellulose derivatives).

The binder binds the nanotubes and the fluororesin when the composition for a fluororesin-containing coating is used as a coating film. Examples of the binder include proteins such as gelatin, casein, animal glue, and collagen; polysaccharides such as oxidized starch and phosphate-esterified starch; and synthetic resins such as poly (meth)acrylic acid derivatives, latex, thermoplastic elastomers, silicone-based elastomers, and silicone-based rubber.

The amount of the carbon nanotubes is 0.01 ~ 0.5% by mass, preferably 0.025 ~ 0.4% by mass, and more preferably 0.05 ~ 0.2% by mass with respect to 100% by mass of the total of the fluororesin and the carbon nanotubes. When the amount of the carbon nanotubes is equal to or more than the lower limit value, the conductivity when used as a coating film is improved. When the amount of the carbon nanotubes is equal to or less than the upper limit value, the desorption of the carbon nanotubes is reduced when the coating film is used, and the contamination by the carbon nanotubes is reduced.

The amount of the fluororesin is preferably 99.5 ~ 99.99% by mass, more preferably 99.6 ~ 99.975% by mass, and even more preferably 99.8 ~ 99.95% by mass with respect to 100% by mass of the total of the fluororesin and the carbon nanotubes. When the amount of the fluororesin is equal to or more than the lower limit value, the carbon nanotubes are sufficiently fixed by the fluororesin when the coating film is formed, and the desorption of the carbon nanotubes is further reduced. Therefore, the contamination by carbon nanotubes is further reduced.

When the amount of the fluororesin is equal to or less than the upper limit value, the conductivity of the coating film is further improved.

When the composition for a fluororesin-containing coating of the present invention contains the dispersant, the amount of the dispersant is appropriately selected within a range in which the conductivity is not impaired and the dispersibility can be improved. However, the amount of the dispersant is preferably 50 ~ 3000 parts by mass, more preferably 75 ~ 2000 parts by mass, and even more preferably 100 ~ 1000 parts by mass with respect to 100 parts by mass of the carbon nanotubes.

When the amount of the dispersant is equal to or more than the lower limit value, the dispersibility of the composition for a fluororesin-containing coating is improved. When the amount of the dispersant is equal to or less than the upper limit value, the conductivity of the coating film is further improved.

The composition for a fluororesin-containing coating of the present invention can be produced, for example, by mixing a carbon nanotube dispersion liquid in which the carbon nanotubes are dispersed in the dispersion medium and a fluororesin dispersion liquid in which the fluororesin is dispersed in the dispersion medium.

The carbon nanotube dispersion liquid is a liquid containing the carbon nanotubes and the dispersion medium. The dispersion medium in the carbon nanotube dispersion is preferably compatible with the fluororesin dispersion. Further, the dispersion medium of the carbon nanotube dispersion liquid preferably has excellent wettability to the fluororesin.

The carbon nanotube dispersion medium preferably further contains a dispersant, and may further contain a binder for the fluororesin, if necessary.

Details and preferred embodiments of the carbon nanotubes, the dispersion medium, the dispersant, and the binder are as described above.

The fluororesin dispersion is a liquid containing the fluororesin and the dispersion medium. Details and preferred embodiments of the fluororesin and the dispersion media are as described above.

The dispersion medium of the fluororesin dispersion liquid may be the same as or different from the dispersion medium of the carbon nanotube dispersion liquid. However, the dispersion medium of the fluororesin dispersion liquid is preferably the same as the dispersion medium of the carbon nanotube dispersion liquid.

The amount of the carbon nanotubes in the carbon nanotube dispersion is preferably 0.01 ~ 1% by mass, more preferably 0.025 ~ 0.5% by mass, and even more preferably 0.05 ~ 0.2% with respect to 100% by mass of the carbon nanotube dispersion liquid.

The carbon nanotube dispersion liquid can be prepared, for example, by uniformly mixing the carbon nanotubes, the dispersion medium, the dispersant, and, if necessary, the binder. For mixing, ultrasonic irradiation, a bead mill, and the like can be used.

The fluororesin dispersion liquid may be a commercially available product or a prepared one. As a commercially available fluororesin dispersion liquid, Polyflon PTFE dispersion D-1E, Polyflon PTFE dispersion D0210C, and Polyflon PTFE dispersion D-311) (trade names, all manufactured by DAIKIN Industries, Ltd.); Fluon^{®} AD911E, Fluon^{®} AD915E, Fluon^{®} AD916E, and Fluon^{®} AD939E (trade names, manufactured by AGC Co., Ltd.); Teflon^{®} (registered trademark), PTFE dispersion 31-JR, and PTFE dispersion 34-JR (trade names, manufactured by Chemours-Mitsui Fluoroproducts Co.,Ltd.) and the like can be mentioned. However, the fluororesin dispersion liquid is not limited to these examples.

The method of mixing the carbon nanotube dispersion liquid and the fluororesin dispersion liquid is not particularly limited. For example, a method of mixing the carbon nanotube dispersion liquid and the fluororesin dispersion liquid with a stirrer can be mentioned.

### (Effects)

In the composition for a fluororesin-containing coating of the present invention described above, the amount of the carbon nanotubes is 0.5% by mass or less with respect to 100% by mass of the total of the fluororesin and the carbon nanotubes. As described above, since the amount of the carbon nanotubes is low, it is difficult for the carbon nanotubes to be desorbed from the film when the coating film is formed. Therefore, contamination by the carbon nanotubes is reduced.

Further, as shown in Examples described later, according to the composition for a fluororesin-containing coating of the present invention, a coating film having sufficient conductivity can be formed. In addition, since the coating film is also conductive in the thickness direction, dielectric breakdown is unlikely to occur when used in a semiconductor production device. Further, the composition for a fluororesin-containing coating of the present invention has excellent workability even when the structure of the device and the shape of the reaction vessel are complicated because it is not necessary to weld the coating film when it is provided on the surface of the substrate.

### <Coating film>

The coating film of the present invention is a heat-treated product of the composition for a fluororesin-containing coating of the present invention.

The coating film of the present invention can be obtained by heat-treating the composition for a fluororesin-containing coating of the present invention. The thickness of the film before the heat-treating can be appropriately selected according to the desired thickness of the coating film. For example, the thickness of the film before heat-treating may be 5 ~ 30 µm.

The dispersion medium is evaporated by heat-treating, the binder, the dispersant, and the like are fired, and the fluororesin is sintered to obtain a coating film.

For example, the dispersion medium can be evaporated by heating to 80 ~ 120°C, the binder, the dispersant and the like can be fired by heating to 200 ~ 320°C, and the fluororesin can be heated to 360 ~ 400°C to be sintered.

It is not necessary to evaporate all the dispersion medium. The dispersion medium may remain as long as there is no problem in firing the binder, dispersant, and the like, and sintering the fluororesin.

The thickness of the coating film of the present invention is preferably 5 ~ 300 µm, more preferably 10 ~ 200 µm, and even more preferably 30 ~ 100 µm.

When the thickness of the coating film is equal to or more than the lower limit value, a uniform coating film can be easily obtained. When the thickness of the coating film is equal to or less than the upper limit value, the shrinkage of the coating film can be relaxed and cracks and the like are less likely to occur.

The resistivity of the coating film of the present invention is preferably 1 ~ 10¹⁰ Ω/□, more preferably 10¹ ~ 10⁸ Ω/□, and even more preferably 10² ~ 10⁶ Ω/□.

When the resistivity of the coating film is equal to or more than the lower limit value, the conductivity is further excellent, electric conduction is possible even in the thickness direction of the film, and static electricity charged in the fluid flowing on the surface of the coating film can be eliminated.

When the resistivity of the coating film is equal to or less than the upper limit value, charge on the surface of the coating film can be sufficiently prevented, and the attachment of powder can be suppressed.

The resistivity of the coating film can be measured by the four-terminal method using a resistivity meter (for example, "Loresta GP MCP-T160 type" manufactured by Mitsubishi Chemical Analytech Co., Ltd.).

Since the coating film of the present invention is a heat-treated product of the composition for a fluororesin-containing coating of the present invention, the amount of the carbon nanotubes is extremely small, and the carbon nanotubes are firmly fixed in a state of being uniformly attached to the fluororesin. Furthermore, the amount of the carbon nanotubes present on the surface of the coating film is even smaller, and the amount of carbon nanotubes desorbed due to contact with an insulating substance is extremely small.

The coating film of the present invention has excellent conductivity and enables electric conduction even in the thickness direction of the coating film. In the coating film of the present invention, even if the insulating substance flows on the surface of the coating film, foreign substances such as impurities are unlikely to be generated.

### <Substrate>

The substrate of the present invention is heat-treated with the composition for a fluororesin-containing coating of the present invention. It can be said that the substrate of the present invention has a coating film formed by the composition for a fluororesin-containing coating of the present invention. Further, it can be said that the substrate of the present invention has the coating film of the present invention.

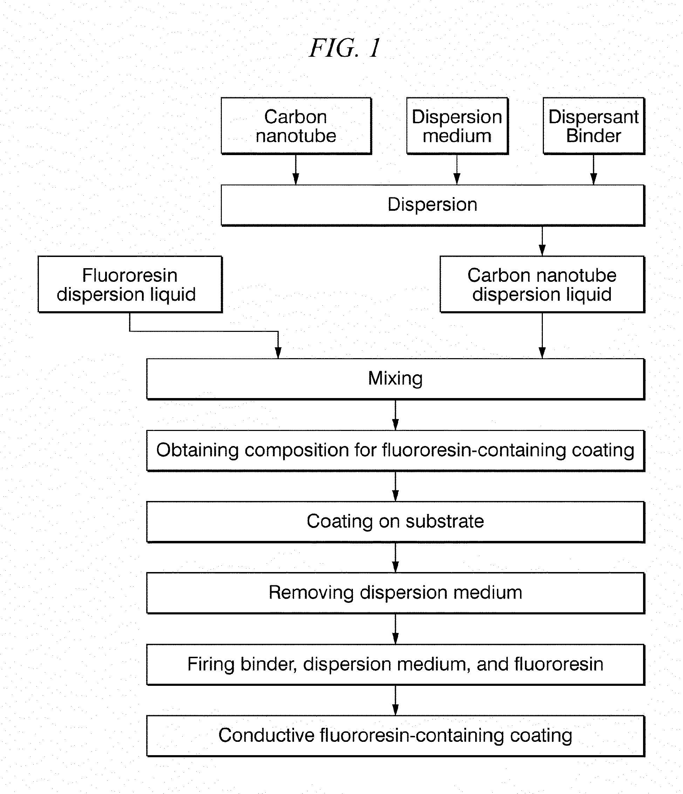

FIG. 1 is a flow chart showing an example of a production method for a substrate of the present invention.

As shown in FIG. 1, the carbon nanotube dispersion liquid is prepared by mixing the carbon nanotubes, the dispersion medium, and if necessary, the dispersant and the binder. In addition, the fluororesin dispersion liquid is prepared separately. Next, the carbon nanotube dispersion liquid and the fluororesin dispersion liquid are mixed to obtain the composition for a fluororesin-containing coating.

Next, the composition for a fluororesin-containing coating is coated to a surface of an object to be treated, a film containing the composition for a fluororesin-containing coating is provided, and the coating film is dried and fired. As a result, a substrate having the coating film on the surface is obtained, and a fluororesin coating can be coated to the surface of the object to be treated.

The substrate of the present invention can be produced, for example, by coating the composition for a fluororesin-containing coating on the surface of an object to be treated such as metal, resin, glass, wood, and paper, and removing the dispersion medium. The shape of the object to be treated may be a film shape, a sheet shape, a plate shape, or a fibrous shape.

The method of coating the composition for a fluororesin-containing coating to the surface of the object to be treated may be selected according to the shape of the substrate. For example, gravure coating, roll coating, die coating, dip coating, spray coating, spin coating, screen printing, brush coating, electrostatic coating and the like can be used. However, the coating method is not limited to these examples.

The thickness of the coating film containing the composition for a fluororesin-containing coating on the surface of the object to be treated is not particularly limited. The coating film obtained can be coated so that the thickness is, for example, 30 µm ~ 1.5 mm. Further, it may be coated a plurality of times.

When removing the dispersion medium, a heat treatment is performed on the coating film containing composition for a fluororesin-containing coating provided on the surface of the object to be treated. For example, the dispersion medium can be evaporated by heating to 80 ~ 120°C, the binder, the dispersant, and the like can be fired by heating to 200 ~ 320°C, and the fluororesin can be heated to 360 ~ 400°C to be sintered.

The surface resistivity of the substrate of the present invention is preferably 1 to 10¹⁰ Ω/□, more preferably 10¹ to 10⁸ Ω/□, and even more preferably 10² ~ 10⁶ Ω/□.

The surface resistivity can be measured by the four-terminal method using a resistivity meter (for example, "Loresta GP MCP-T160 type" manufactured by Mitsubishi Chemical Analytech Co., Ltd.).

The substrate of the present invention is heat-treated with the composition for a fluororesin-containing coating of the present invention. The amount of the carbon nanotubes in the coating film is extremely small, and the carbon nanotubes are firmly fixed in the fluororesin. In addition, the amount of the carbon nanotubes present on the surface of the coating film is even smaller, and the desorption of the carbon nanotubes caused by the substrate coming into contact with the insulating substance is extremely small. Therefore, according to the substrate of the present invention, contamination by carbon nanotubes is reduced.

In addition, in the coating film provided on the surface of the substrate of the present invention, the carbon nanotubes are uniformly attached to the fluororesin and firmly fixed by the fluororesin.

According to the substrate of the present invention, even if an insulating substance flows on the surface of the coating film, foreign substances such as impurities are unlikely to be generated.

### (Use)

According to the composition for a fluororesin-containing coating of the present invention, since the coating film also has conductivity in the thickness direction, it is possible to provide a coating film that can prevent the generation of charging due to the flow of the insulating substance and can eliminate static electricity of the insulating substance.

The coating film obtained by the composition for a fluororesin-containing coating of the present invention can be widely used in industrial fields in which corrosion resistance, conductivity, and less contamination by impurities are required. In particular, the substrate of the present invention can be suitably used in a member (reaction tank, piping, and the like) that comes into contact with an insulating substance in a semiconductor production device.

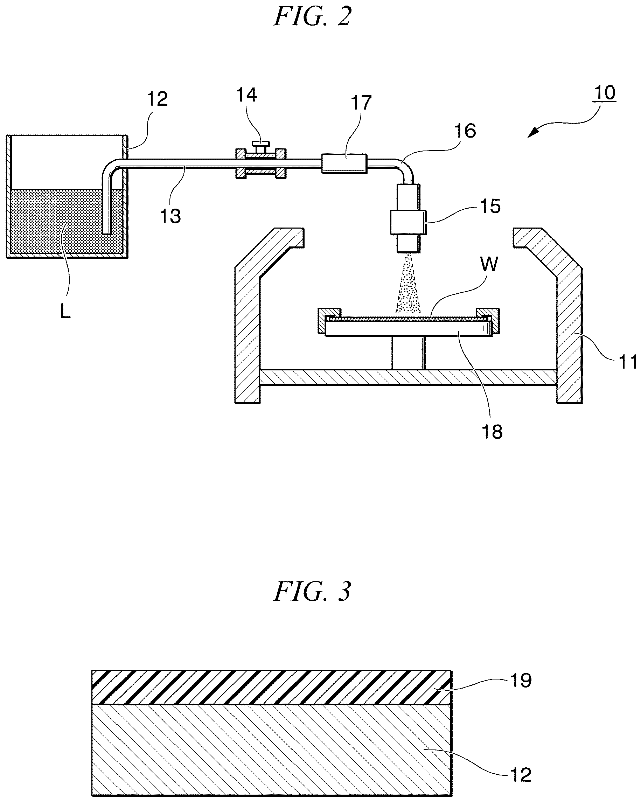

FIG. 2 is a schematic diagram showing an example of a semiconductor production device to which the coating film obtained by the composition for a fluororesin-containing coating of the present invention is applied. FIG. 3 is a cross-sectional view of a member forming a tank included in the semiconductor production device of FIG. 2.

As shown in FIG. 2, the semiconductor production device 10 includes a chamber 11, a tank 12 for storing a liquid L containing a chemical, a tube 13 through which the liquid L flows, a valve 14 for controlling the flow rate of the liquid L, a nozzle 15 for spraying the liquid L in the chamber 11, a tube 16 for supplying the liquid L to the nozzle 15, a coupler 17 for connecting the tube 13 and the tube 16, and a table 18 on which a wafer W is placed.

The semiconductor production device 10 can spray the liquid L supplied from the tank 12 into the chamber 11 from the tip of the nozzle 15 and wash the wafer W by the action of the chemicals in the liquid L.

In the example shown in FIGS. 2 and 3, a coating film 19 obtained by the composition for a fluororesin-containing coating of the present invention is provided on the surface of the inner wall of the tank 12.

On the inner wall of the tank 12 of the semiconductor production device 10, a coating film is formed that can prevent the generation of charging due to the flow of insulating substances and can eliminate static electricity of the insulating substance.

Therefore, when the wafer W is washed using the liquid L supplied from the tank 12, the liquid L can be prevented from being electrically charged and the static electricity of the liquid L can be effectively removed. In addition, since the carbon nanotubes are less desorbed from the coating film, even if the liquid L is used, contamination in the wafer W, the product, and the device is reduced.

### <Examples>

Hereinafter, the present invention will be specifically described with reference to Examples, but the present invention is not limited to the following description.

### [Materials]

CNT1: carbon nanotubes with an average fiber length of 250 ~ 450 µm ("Highly oriented carbon nanotube EL grade" manufactured by TAIYO NIPPON SANSO CORPORATION)

CNT1 is a mixture containing a plurality of carbon nanotubes having a fiber length in the range of 100 ~ 600 µm. In reality, there are variations in the average fiber length of carbon nanotubes between lots.

CNT2: multilayer carbon nanotubes having an average fiber length of 9.5 µm ("NC7000" manufactured by Nanocycl)

Fluororesin dispersion liquid: polytetrafluoroethylene dispersion ("Fluon^{®} AD911E" manufactured by AGC Inc.)

### [Measuring method]

The surface resistivity of a test film obtained in each example was measured by the four-terminal method using a resistivity meter ("Loresta GP MCP-T160 type" manufactured by Mitsubishi Chemical Analytech Co., Ltd.).

### [Evaluation method]

The electric conduction in the thickness direction of the coating film between the surface of the test film and the surface of the substrate obtained in each example was evaluated by the following method. The resistance value was measured using an insulation resistance meter (insulation resistance meter ("Model DI-8" manufactured by Musashi In-Tech Corp.)), and the electric conduction was evaluated according to the following criteria.
○: The resistance value is less than 20 MΩ.
×: The resistance value is equal to 20 MΩ or more.

### [Example 1]

CNT1 and carboxylmethyl cellulose were added to 10 g of ion-exchanged water so that the concentration of CNT1 was 0.05% by mass and the concentration of sodium carboxylmethyl cellulose ("MAC500LC" manufactured by Nippon Paper Industries Co., Ltd.) was 0.05% by mass. The obtained mixed liquid was irradiated with ultrasonic waves for 1 hour using an ultrasonic disperser to prepare a carbon nanotube dispersion liquid.

Next, the carbon nanotube dispersion liquid and 10 g of the fluororesin dispersion liquid were mixed so that the amount of the carbon nanotubes was 0.01% by mass with respect to the total of 100% by mass of the fluororesin and the carbon nanotubes. The obtained mixture was stirred with a magnetic stirrer for 1 hour to prepare a composition for a fluororesin-containing coating.

The obtained composition for a fluororesin-containing coating was placed in a stainless steel vat and dried at 80°C. Then, it was heated at 360°C to fire and produce a coating film, which was used as a test film.

### [Examples 2 to 5, Comparative Examples 1 and 2]

A composition for a fluororesin-containing coating of each example was produced in the same manner as in Example 1 except that the carbon nanotubes used as raw materials and the amount of the carbon nanotubes were changed as shown in Tables 1 and 2. The coating film of the example was produced and used as a test film.

**[Table 1]**

| | Example 1 | Example 2 | Example 3 | Example 4 | Example 5 |
|---|---|---|---|---|---|
| Carbon nanotube | CNT1 | CNT1 | CNT1 | CNT1 | CNT1 |
| Amount of carbon nanotubes with respect to 100% by mass of total of fluororesin and carbon nanotubes (% by mass) | 0.01 | 0.025 | 0.05 | 0.2 | 0.5 |
| Surface resistivity (Ω/□) | 5×10⁸ 7×10⁹ | 6 × 10⁶ 2 × 10⁷ | 3 × 10³ 8 × 10⁴ | 2 × 10² 4 × 10³ | 9 × 10° 1 × 10² |
| Electric conduction | ○ | ○ | ○ | ○ | ○ |

**[Table 2]**

| | Comparative Example 1 | Comparative Example 2 |
|---|---|---|
| Carbon nanotube | CNT2 | CNT2 |
| Amount of carbon nanotubes with respect to 100% by mass of total of fluororesin and carbon nanotubes (% by mass) | 1 | 5 |
| Surface resistivity (Ω/□) | > 10 × 10¹⁰ | 2 × 10⁶ 5 × 10⁴ |
| Electric conduction | × | ○ |

In Examples 1 to 5 in which the amount of the carbon nanotubes was within the range specified in the present invention, the surface resistivity of the coating film was less than 10¹⁰ Ω/□, and the conductivity of the coating film was sufficient.

In Examples 4 and 5, the average fiber length of the carbon nanotubes was relatively long due to variations between lots. In Examples 4 and 5, even if the amount of the carbon nanotubes was relatively small, the surface resistivity was less than 10⁴ Ω/□, and the conductivity when used as a coating film was further excellent. Further, in Examples 1 to 5, the surface of the coating film and the surface of the substrate were conductive in the thickness direction of the coating film, and the entire coating film had conductivity.

### INDUSTRIAL APPLICABILITY

The present invention can be used in semiconductor fields such as a wafer-polishing device, wafer-cleaning device, resist-coating device, exposure device, CVD device, etching device, lead frame-plating device, packaging device, and inspection stage; plasma field of liquid crystal, and the like such as a glass substrate transfer device, substrate-heating plate, and substrate-cooling plate; chemical fields such as a reactor, pipe, storage tank, stirrer, and tank lorry; and parts used in various industrial fields (cleaner stage, transfer stage, spin coater stage, marking table, hot plate, printing stage, seal dispenser table, liquid crystal dropping stage, alignment film coating stage, slot-coating stage, alliant table, exposure stage, filter housing, filter housing tank, workbench, table, arm, conveyor belt, piping, ferrule, reactor, coupler, tank, pipe, tube, joint, hopper, cyclone, roll, guide, shooter, straight pipe, spacer, elbow, T tube, sight glass, flange, reducer, bellows, flexible hose, pliable hose, diaphragm valve, butterfly valve, plug valve, ball valve, check valve, lining pump, flow meter, vessel, adsorption tower, container, heat exchanger, valve, basket, pump, hose, roller, seat, rod, cup, reaction tank, nozzle, packing, gasket, adhesive tape, tape, printed wiring board, jig, bottle, bottle cap, wafer carrier, carrier handles, and the like).

### Explanation of reference numeral

- 10: semiconductor production device
- 11: chamber
- 12: tank
- 13: tube
- 14: valve
- 15: nozzle
- 16: tube
- 17: coupler
- 18: table
- 19: coating film
- L: liquid
- W: Wafer

## Claims

1. A composition for a fluororesin-containing coating containing carbon nanotubes, a fluororesin, and a dispersion medium, and the amount of the carbon nanotubes is 0.01 ~ 0.5% by mass with respect to 100% by mass of the total of the fluororesin and the carbon nanotubes.

2. The composition for a fluororesin-containing coating according to Claim 1, wherein the fluororesin is at least one selected from the group consisting of a copolymer including a structural unit based on tetrafluoroethylene and a structural unit based on perfluoroalkyl vinyl ether, a copolymer including a structural unit based on tetrafluoroethylene, and a structural unit based on hexafluoropropylene, a copolymer including a structural unit based on tetrafluoroethylene and a structural unit based on ethylene, polytetrafluoroethylene, and polyvinylidene fluoride.

3. The composition for a fluororesin-containing coating according to Claim 1 or 2, wherein an average fiber length of the carbon nanotubes is 100 ~ 600 µm.

4. The composition for a fluororesin-containing coating according to any one of Claims 1 to 3, wherein the composition further contains a dispersant for dispersing the carbon nanotubes in the dispersion medium.

5. The composition for a fluororesin-containing coating according to Claim 4, wherein the dispersant is at least one selected from the group consisting of carboxymethyl cellulose, carboxyethyl cellulose, cellulose ether, aminoethyl cellulose, oxyethyl cellulose, hydroxymethyl cellulose, hydroxyethyl cellulose, hydroxypropyl cellulose, methyl cellulose, ethyl cellulose, benzyl cellulose, and trimethyl cellulose.

6. The composition for a fluororesin-containing coating according to Claim 4 or 5, wherein the concentration of the dispersant is 50 ~ 3000 parts by mass with respect to 100 parts by mass of the carbon nanotubes.

7. A coating film which is a heat-treated product of the composition for a fluororesin-containing coating according to any one of Claims 1 to 6.

8. A substrate heat-treated with the composition for a fluororesin-containing coating according to any one of Claims 1 to 6.

9. The substrate according to Claim 8, wherein a surface resistivity thereof is 1 ~ 10¹⁰ Ω/□_{.}
